# NEUE EUROPÄISCHE PATENTSCHRIFT

(11) **EP 1 144 875 B2**
(45) Veröffentlichungstag und Bekanntmachung des Hinweises auf die Entscheidung über den Einspruch: **21.11.2007**
(45) Hinweis auf die Patenterteilung: 11.09.2002
(21) Anmeldenummer: 99960789.8
(22) Anmeldetag: 14.10.1999
(51) Int. Cl.: F16B 12/20

(54) **LÖSBARE VERBINDUNG ZWEIER ELEMENTE**
DETACHABLE ASSEMBLY OF TWO ELEMENTS
ASSEMBLAGE LIBERABLE DE DEUX ELEMENTS

(30) Priorität: 15.12.1998 DE 19857795
(43) Veröffentlichungstag der Anmeldung: 17.10.2001
(73) Patentinhaber: Niklaus, Hilmar, 97654 Bastheim (DE)
(72) Erfinder: Niklaus, Hilmar, 97654 Bastheim (DE)
(74) Vertreter: Pöhner, Wilfried Anton, Dr.
(86) Internationale Anmeldenummer: PCT/DE1999/003336
(87) Internationale Veröffentlichungsnummer: WO 2000/036308

(56) Entgegenhaltungen:
- WO-A-97/32140
- DE-A- 1 811 743
- US-A- 4 599 011
- US-A- 4 783 189
- US-A- 5 119 610

## Beschreibung

Die Erfindung bezieht sich auf eine lösbare Verbindung bestehend aus zwei Elementen und wenigstens einem dazwischen angeordneten Bolzen, der zumindest an einem Ende über einen an einem der Elemente angebrachten Spannkörper festgelegt ist, wobei der Spannkörper um eine im wesentlichen senkrecht zum Bolzen verlaufende Achse gegenüber dem Element drehbar ist und der Spannkörper in jeder Drehposition gegenüber dem Bolzen und/oder dem Element durch Kraftschluss festgelegt ist und die Festlegung des Bolzens am Spannkörper um eine von der Achse des Spannkörpers beabstandete, annähernd dazu parallele Achse drehbar ist und die Verbindung zwischen Bolzen und Spannkörper durch einen lösbar am Bolzen angebrachten Haltekopf, der relativ.zum Spannkörper drehbar ist, hergestellt ist.

Derartige Verbindungen zum Zusammenfügen von Elementen, insbesondere aus Holz sind in unterschiedlichsten Ausführungen bekannt und werden häufig in Möbeln vor allem zur Herstellung von Eckverbindungen eingesetzt. Der Bolzen verbindet die Elemente untereinander und wird auf einer Seite durch einen Spannkörper fixiert, der zumeist in einem Hohlraum des Möbelstückes untergebracht ist. Der Spannkörper hat zumeist die Form einer Scheibe, die in einem Ring drehbar ist, und zu der der Bolzen in radialer Richtung verläuft. Zur Herstellung der Verbindung wird der Bolzen durch einen schlitz des Ringes eingeführt und die Scheibe gegenüber dem Ring und dem Bolzen um eine senkrecht zur Scheibenebene stehende Achse gedreht, wodurch sich ein an der Scheibe angeformter Keil durch eine Öse des Bolzens schiebt und sie beim weiteren Drehen in radialer Richtung der Scheibe nach innen zieht. Der radial äußere Rand des Keiles verläuft dabei etwa in Form eines Kreisbogens, dessen Mittelpunkt auf der Drehachse liegt, als radiale Begrenzung der Scheibe am Ring entlang während der radiale Abstand des an der Öse anliegenden inneren Keilrandes von der Drehachse der Scheibe immer weiter abnimmt, so daß die Öse in radialer Richtung nach innen gezogen wird. In US 4,783,189 ist ein Verbindungselement mit Spannexzenter zur Verbindung zweier oder mehrerer Bauteile beschrieben. Das Verbindungselement besteht aus einem zylindrischen Stab, der endseitig zumindest abschnittsweise ein Gewinde aufweist und als Schraubenschaft bezeichnet werden kann. Auf das Gewinde des zylindrischen Schraubenschaftes sind Haltemuttern aufschraubbar, deren Außenseite auf der in axialer Richtung des Schraubenschaftes gerichteten Außenseite derart abgerundet ist, dass sie an der exzentrisch geformten Innenseite eines Spannkörpers flächig anliegt. Auf der vom Schraubenschaft abgewandten Seite liegt die Haltemutter nicht an der Innenseite des Spannkörpers an. In der WO 97/32140 erfolgt die Spannung des Bolzens durch eine drehbare zylinderförmige Hülse, in der eine exzentrische Aussparung vorgesehen ist, die den Kopf des Bolzens aufnimmt. Bei Drehung der Hülse hintergreifen die über den Azimut unterschiedliche Randstärken den Kopf des Bolzens und spannen diesen mehr oder weniger in axiale Richtung. An seinem anderen Ende ist der Bolzen an einem anderen Element, in der Regel einer seitlichen Möbelwand, befestigt, das durch Spannung des Bolzens an dem mit dem Spannkörper versehenen Element festgezogen wird. Reibungsschluß zwischen Scheibe und Ring, aber auch zwischen Scheibe und Bolzen fixiert die Scheibe in der jeweiligen Position. Nachteilig ist jedoch, daß der Spannkörper nur am hinteren Ende der öse anliegt und damit lediglich Zugbelastungen auf den Bolzen übertragen kann. Bei derartigen Verbindungen muß der Bolzen ständig unter Spannung stehen, was eine relativ nohe Materialermüdung zur Folge hat. Außerdem kann, falls die Verbindung später wieder gelöst werden soll, zum Auseinanderdrücken der Elemente keine Druckbelastung über den Bolzen ausgeübt werden. Die Elemente müßen also mit anderen Werkzeugen auseinander getrieben werden.

Die Erfindung hat sich demgegenüber die Aufgabe gestellt, eine lösbare Verbindung zwischen Elementen zu schaffen, bei der über einen Bolzen sowohl Zugals auch Druckkräfte zwischen den Elementen übertragen werden Können.

Die Aufgabe wird erfindungsgemäß durch ein Verbindungselement gelöst, das dadurch gekennzeichnet ist, dass der Bolzen beidseits eine in azimutale Richtung verlaufende Nut aufweist, der hohlzylindrische Haltekopf einen im wesentlichen in axialer Richtung des Spannkörpers verlaufenden Schlitz aufweist, dessen Flanken in die in azimutaler Richtung verlaufende Nut des Bolzens eingreift, der Haltekopf mit seiner dem Bolzen zugewandten und seiner vom Bolzen abgewandten äußeren Mantelfläche formschlüssig an der exzentrisch geformten Innenseite des Spannkörpers anliegt. Die Befestigung zwischen Bolzen und spannkörper erfolgt über einen mit dem Bolzen lösbar verbundenen Haltekopf, der sich mit dem Bolzen gegenüber dem spannkörper dreht. Da der Bolzen in diesem Fall keine zur Herstellung einer drehbaren Verbindung notwendigen Maßnahmen tragen muss, lässt er sich derart gestalten, dass er auch durch enge Kanäle geführt werden kann.

Die Wirkung ist die eines Exzenters, über den der Bolzen in seiner Längsrichtung in Abhängigkeit von der Drehrichtung des Spannkörpers gezogen oder geschoben wird. Die maximal mögliche Strecke, über die der Bolzen spannbar ist, entspricht der doppelten Exzentrizität.

wie bei den aus dem Stand der Technik, bekannten Verbindungen bei Möbeln kann auch bei der erfindungsgemäßen Verbindung der Bolzen an dem vom Spannkörper abgewandten Ende am anderen Element befestigt sein. Alternativ dazu kann das andere Ende des Bolzens ebenfalls auf die beschriebene Art und Weise an einem weiteren Spannkörper angebracht sein. Neben der Erhöhung der Strecke, über die eine Spannung des Bolzens möglich ist, kann damit auf beide Elemente durch den daran angebrachten Spannkörper direkt eine Spannkraft übertragen werden, die unter Umständen teilweise von der Führung des Bolzens aufgenommen würde.

Wie bereits im stand der Technik, so kann auch bei der erfindungsgemäßen Verbindung der Spannkörper gegen Zurückdrehen durcn Reibungsschluß gesichert sein, der zwischen dem Spannkörper und dem Element oder auch zwischen dem Spannkörper und dem Bolzen auftritt. Möglichst jedoch sollte die Reibungskraft sowohl durch den Bolzen als auch durch das Element am spannkörper angreifen, so daß die Fixierung stabiler gegen Belastungen ist.

Indem der Bolzen ein Element auf einer gewissen Länge durchgreift, ist eine Spannung der Gegenstände gegeneinander auf einer längeren Strecke möglich. Die Verbindung wird dadurch schon bei relativ geringen Spannkräften auch gegen Erschütterungen stabil.

Es ist auch möglich, daß der Bolzen ein drittes, zwischen den beiden Elementen angeordnetes Element durchstößt- Damit läßt sich eine Kreuzverbindung oder eine Pfostenriegelverbindung erstellen. Das erste und zweite Element kann beispielsweise den Pfosten oder den vertikalen KreuzBolzen bilden, während das dritte Element den dazwischen angeordneten Riegel oder horizontalen KreuzBolzen darstellt. Alternativ dazu ist auch denkbar, daß das dritte Element den Pfosten oder vertikalen KreuzBolzen bildet.

Wie aus dem Stand der Technik bekannt, kann der Spannkörper an einem Element durch Unterbringung in einem Hohlraum befestigt sein. Damit auf den Bolzen sowohl Zug- als auch Druckkräfte übertragen werden können, muß der Spannkörper in Längsrichtung des Bolzens beidseits durch den Hohlraum festgelegt sein.

Der Haltekopf kann am Spannkörper bleibend befestigt sein. Vorzugsweise aber ist er mit dem Spannkörper lösbar verbunden. Bei einer anstehenden Reparatur ist ein Austausch lediglich des Haltekopfes oder des Spannkörpers einzeln möglich, und durch Austausch des Spannkörpers sind mit ein und demselben Haltekopf Verbindungen unterschiedlicher Exzentrizität erreichbar.

vorzugsweise wird der Bolzen im Haltekopf durch einen axial verlaufenden Schlitz fixiert, dessen Flanken beidseits des Bolzens in eine azimutal verlaufende Nut eingreifen. Dabei ist denkbar, daß beide Flanken in dieselbe Nut eingreifen, die den Bolzen über einen Winkel von mehr als 180° umläuft, oder daß der Bolzen zwei azimutal verlaufende, radial etwa gegenüberliegende Nuten aufweist. Aufgrund der axialen Ausrichtung des Schlitzes gegenüber dem Spannkörper wird der Bolzen in seiner Längsrichtung fixiert und bei Drehung des Spannkörpers um seine Achse tritt, da der Schlitz parallel zu beiden Drehachsen ausgerichtet ist, keine Kraftkomponente in Längsrichtung des Schlitzes auf, durch die sich der Bolzen entlang des Schlitzes bewegen und dabei aus dem. Ealtekopf lösen könnte. Die Herstellung der Verbindung zwischen Bolzen und Haltekopf ist dabei durch Einführung des Bolzens in eine Öffnung des Schlitzes einfach möglich, die Handhabbarkeit des Bolzens ist durch die Nut keineswegs beeinträchtigt.

Ideal ist die Nut des Bolzens als eine umlaufende Ringnut auszubilden. Die Verbindung kann in diesem Fall unabhängig von der Orientierung des Spannkörpers und Haltekopfes relativ zur Längsrichtung des Bolzens hergestellt werden.

Eine stabile Verbindung mit einer großen Kontaktfläche zwischen dem Bolzenende bzw. Haltekopf und dem Spannkörper ist erreichbar durch einen außeraxial im Spannkörper untergebrachten Hohlraum, in dem der Haltekopf bzw. das Bolzenende derart unterzubringen ist, daß es/er in Längsrichtung des Bolzens festgelegt ist und sowohl Zug- als auch Druckkräfte auf den Bolzen übertragen werden können.

Damit sich der Spannkörper nicht durch über den Bolzen einwirkende Kräfte verkeilt, sollte der Bolzen am Spannkörper in Bezug auf dessen Längsrichtung möglichst mittig angebracht sein. Aus diesem Grunde hat der Spannkörper zur selbstätigen Ausrichtung einen azimutal verlaufenden Schlitz, den der Bolzen durchgreift. Ein Spannkörper mit diesem Merkmal kann von größerer axialer Ausdehnung sein, was ein Verkeilen zusätzlich erschwert.

Damit bei einem Spannkörper mit azimutal verlaufendem Schlitz die Einführung des Bolzens vereinfacht ist, verfügt der Spannkörper zusätzlich über einen im wesentlichen axial verlaufenden Schlitz, dessen Breite, um eine Einführung des Bolzens zu ermöglichen, größer sein muß als der Durchmesser des Bolzens. Insbesondere sinnvoll erscheint dieses Merkmal in Kombination mit einem im wesentlichen in axialer Richtung des Spannkörpers verlaufenden Schlitz des Haltekopfes, von dem der Bolzen aufgenommen ist. Zur Einführung des Bolzens wird der Haltekopf im Spannkörper derart verdreht, daß die beiden axial verlaufenden Schlitze in radialer Richtung hintereinander liegen. Der Bolzen kann nun gleichzeitig sowohl in den Haltekopf als auch in den Spannkörper eingeführt werden. Nach Verdrehung des Spannkörpers relativ zum Haltekopf ist der Bolzen durch den azimutalen Schlitz des Spannkörpers gegen eine Bewegung in Längsrichtung des im Haltekopf angebrachten Schlitzes fixiert.

Sowohl für den Hohlraum des Elementes, in dem der Spannkörper drehbar gelagert ist, als auch für den Hohlraum des Spannkörpers, in dem der Haltekopf drehbar gelagert ist, bietet sich die Form eines Zylinders an. Aber auch die äußere Kontur des Spannkörpers oder Haltekopfes ist vorzugsweise in dieser Form gebildet, damit bei relativ großer Kontaktfläche zwischen Hohlraum des Elementes und dem Spannkörper bzw. zwischen einem Hohlraum des Spannkörpers und dem Haltekopf die Wirkung des Exzenters erreichbar ist. Idealerweise sind alle in diesem Zusammenhang erwähnten Konturen zylindrisch.

Bevorzugt ist, einen Hohlraum des Elementes bzw. des Spannkörpers auf einer axialen Seite offen zu gestalten, damit er zur Einbringung des Spannkörpers oder zur Herstellung der Verbindung zugänglich ist und später möglicherweise anfallende Reparaturarbeiten einfacher durchführbar sind.

Das äußere Erscheinungsbild jedoch ist bei verschlossenen Hohlräumen ansprechender. Außerdem wird durch Verschluß eines Hohlraumes erreicht, daß sich der Spannkörper bzw. der Haltekopf nicht unerwünschterweise lösen kann. Es ist auch denkbar, Vorteile eines verschlossenen mit denen eines offenen Hohlraumes zu verbinden, indem der Hohlraum auf einer Seite offen und auf der anderen Seite verschlossen.

Weitere Einzelheiten, Merkmale und Vorteile der Erfindung lassen sich dem nachfolgenden Beschreibungsteil entnehmen, in dem anhand von Zeichnungen ein Ausführungsbeispiel der Erfindung näher erläutert ist. Dabei zeigen in prinzipienhafter Darstellung
- **Figur 1**: die Einzelteile der erfindungsgemäßen Verbindung, und
- **Figur 2**: die Einzelteile zusammengesetzt.

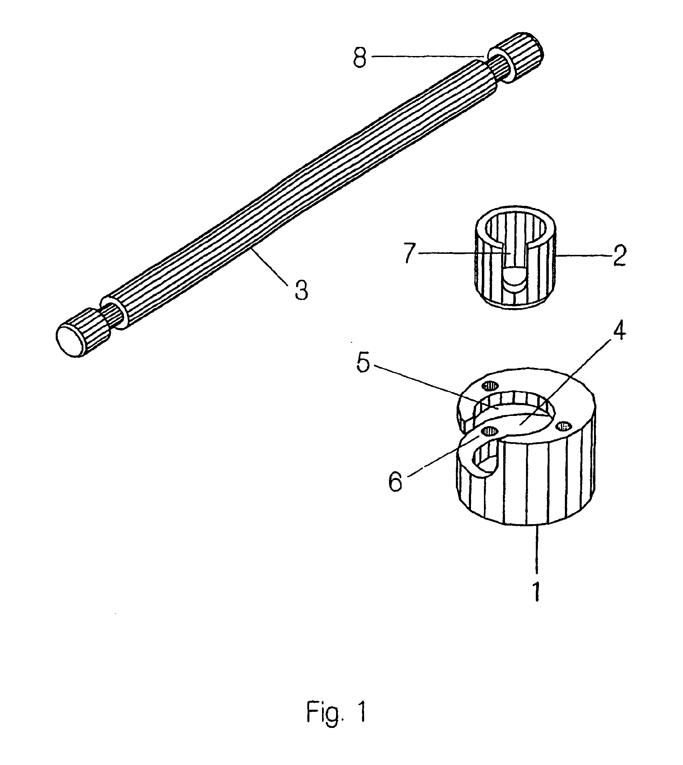

Figur 1 zeigt die erfindungsgemäße Verbindung in perspektivischer Explosionsdarstellung. Sie ist gebildet durch einen Bolzen (3), der in einem Spannkörper (1) über einen Haltekopf (2) befestigt ist. Der Spannkörper (1) enthält einen gegenüber seiner Drehachse versetzten zylindrischen Hohlraum (4) zur Aufnahme des Haltekopfes (2), und damit des Bolzens (3), desweiteren einen azimutalen Schlitz (5), durch den der Bolzen (3) aus dem Hohlraum (4) nach außen geführt wird, sowie einen axialen Schlitz (6) zur Einführung des Bolzens (3) bei Herstellung der Verbindung. Der Haltekopf (2) hat die Form eines Hohlzylinders, dessen Durchmesser geringfügig kleiner ist als der des im Spannkörper (1) untergebrachten Hohlraumes (4) und weist einen axialen Schlitz (7) zur Aufnahme des Bolzens (3) auf, der seinerseits in der Nähe des dem Spannkörper (1) zugewandten Endes mit einer im Bezug auf den Bolzen (3) azimutal verlaufenden Nut (8), hier als umlaufende Ringnut gebildet, versehen ist, die zur Herstellung der Verbindung vom axialen Schlitz (7) des Haltekopfes (2) aufgenommen wird. Durch die Bildung der azimutalen Nut (8) des Bolzens (3) als umlaufende Ringnut ist die Verbindung bei jeglichem Drehwinkel des Bolzens (3) um seine Achse herstellbar.

An seinem anderen Ende weist der Bolzen (3) ebenfalls eine umlaufende Ringnut auf und kann dort an einem weiteren Element festgelegt oder über eine lösbare Verbindung ähnlich der beschriebenen Art angebracht werden. Zur Einführung des Bolzens (3) in den Spannkörper (1) gibt es zwei Möglichkeiten: Die eine besteht darin, zunächst den Haltekopf (2) in den Hohlraum (4) des Spannkörpers (1) derart einzuführen, daß die Achsen von Haltekopf (2) und Hohlraum (4) zusammenfallen, und nachfolgend Haltekopf (2) und Spannkörper (1) derart gegeneinander um die Achse des Hohlraumes (4) bzw. Haltekopfes (2) zu verdrehen, daß der axiale Schlitz (7) des Haltekopfes (2) in annähernd radialer Richtung hinter dem axialen Schlitz (6) des Spannkörpers (1) ausgerichtet ist. Nun wird der Bolzen (3) in axialer Richtung des Spannkörpers (1) bzw. Haltekopfes (2) in die beiden axialen Schlitze (6 bzw. 7) eingeführt, so daß seine Nut (8) vom axialen Schlitz (7) des Haltekopfes (2) aufgenommen wird. Nach Verdrehung des Spannkörpers (1) um seine Achse gegenüber dem Haltekopf (2) durchstößt der Bolzen (3) den azimutalen Schlitz (5) des Spannkörpers (1). Die andere Möglichkeit besteht darin, den Bolzen (3) über die Nut (8) zunächst in den Schlitz (7) des Haltekopfes (2) einzuführen und nachfolgend zusammen mit dem Haltekopf (2) über den axialen Schlitz (6) in den Spannkörper einzuführen. Nach Verdrehung des Spannkörpers (1) um seine Achse erhält man dasselbe Ergebnis.

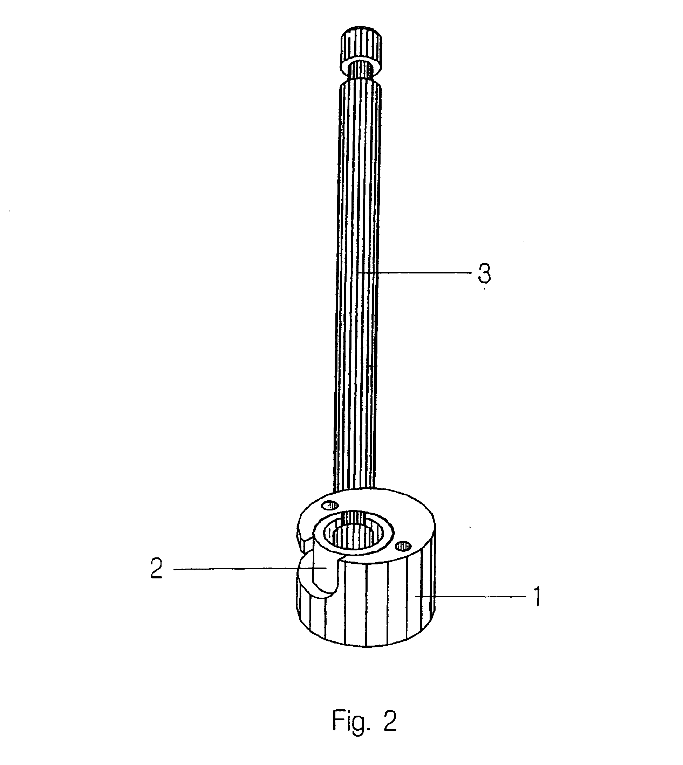

Figur 2 zeigt Spannkörper (1), Haltekopf (2) und Bolzen (3) zusammengesetzt in perspektivischer Darstellung. In der einen axialen Richtung ist der Haltekopf nun fixiert, weil der Hohlraum (4) des Spannkörpers (1) dort verschlossen ist in der anderen axialen Richtung durch den Bolzen (3), der seinerseits aufgrund des azimutalen Schlitzes (5) des Spannkörpers (1) in dessen axialer Richtung fixiert ist. Der Spannkörper (1) wiederum ist in einem etwa zylindrischen Hohlraum des Elementes untergebracht, dessen Zylinderdurchmesser geringfügig größer ist als der des Spannkörpers (1). Zur Übertragung von Zug- oder Druckkräften auf den Bolzen (3) wird der Spannkörper (1) im Hohlraum des Elementes verdreht, wodurch die Drehachse des Haltekopfes (2) aufgrund der Unterbringung in einem exzentrisch angeordneten Hohlraum (4) des Haltekopfes (2) einen Kreisbogen beschreibt. Die Drehung des Spannkörpers (1) kompensiert der Haltekopf (2) durch eine gegenläufige Drehung um seine Symmetrieachse und überträgt dabei je nach Drehrichtung des Spannkörpers (1) Zug- oder Druckkräfte auf den Bolzen (3). Sind die in Kontakt miteinander stehenden Oberflächen des Elementes, des Spannkörpers (1) und des Haltekopfes (2) nicht zu glatt, so wird der Spannkörper (1) in jeder Drehposition durch Reibungsschluß mit dem Element oder dem Haltekopf (2) fixiert.

Insgesamt erhält man eine lösbare Verbindung zwischen zwei Elementen, durch die sich mittels eines Spannkörpers (1) über einen Bolzen (3) sowohl Zugals auch Druckkräfte übertragen lassen.

## Patentansprüche

1. Lösbare Verbindung bestehend aus zwei Elementen und wenigstens einem dazwischen angeordneten Bolzen (3), der zumindest an einem Ende über einen an einem der Elemente angebrachten Spannkörper (1) festgelegt ist, wobei der Spannkörper (1) um eine im wesentlichen senkrecht zum Bolzen (3) verlaufende Achse gegenüber dem Element drehbar ist und der Spannkörper (1) in jeder Drehposition gegenüber dem Bolzen (3) und/oder dem Element durch Kraftschluss festgelegt ist und die Festlegung des Bolzens (3) am Spannkörper (1) um eine von der Achse des Spannkörpers (1) beabstandete, annähernd dazu parallele Achse drehbar ist und die Verbindung zwischen Bolzen (3) und Spannkörper (1) durch einen lösbar am Bolzen (3) angebrachten Haltekopf (2), der relativ zum Spannkörper (1) drehbar ist, hergestellt ist, **dadurch gekennzeichnet, dass**
- der Bolzen (3) beidseits eine in azimutale Richtung verlaufende Nut (8) aufweist,
- der hohlzylindrische Haltekopf (2) einen im wesentlichen in axialer Richtung des Spannkörpers (1) verlaufenden Schlitz (7) aufweist, dessen Flanken in die in azimutaler Richtung verlaufende Nut (8) des Bolzens eingreift,
- der Haltekopf (2) mit seiner dem Bolzen (3) zugewandten und seiner vom Bolzen (3) abgewandten äußeren Mantelfläche formschlüssig an der exzentrisch geformten Innenseite des Spannkörpers (1) anliegt.

2. Verbindung nach Anspruch 1, **dadurch, gekennzeichnet, daß** der Bolzen (3) an seinem anderen Ende am anderen Element befestigt ist.

3. Verbindung nach Anspruch 1, **dadurch gekennzeichnet, daß**
- der Bolzen (3) an seinem anderen Ende über einen weiteren, am anderen Element angebrachten Spannkörper festgelegt ist,
- der andere spannkörper um eine im wesentlichen senkrecht zum Bolzen verlaufenden Achse gegenüber dem anderen Element drehbar ist,
- die Befestigung des Bolzens (3) am anderen Spannkörper an einem von der Achse dieses Spannkörpers beabstandete, dazu annähernd parallele Achse drehbar ist sowie
- der andere Spannkörper in jeder Drehposition gegenüber dem Bolzen (3) und/oder dem anderen Element durch Kraftschluß festgelegt ist.

4. Verbindung nach einem der vorhergehenden Ansprüche **dadurch gekennzeichnet, daß** der Kraftschluß ein Reibungsschluß ist.

5. Verbindung nach einem der vorhergehenden Ansprüche **dadurch gekennzeichnet, daß** der Bolzen (3) zumindest eines der Elemente auf einer gawißen Länge. durchgreift.

6. Verbindung nach einem der vorhergehenden Ansprüche, **dadurch gekennzeichnet, daß** der Bolzen (3) ein drittes Element, das zwischen den beiden Elementen angeordnet ist, durchstößt.

7. Verbindung nach einem der vorhergehenden Ansprüche **dadurch gekennzeichnet, daß** der Spannkörper (1) in einem Hohlraum des Elementes untergebracht ist, der den Spannkörper (1) in Längsrichtung des Bolzens (3) beidseitig festlegt,

8. Verbindung nach Anspruch 1, **dadurch gekennzeichnet daß** der Ealtekopf (2) auch mit dem Spannkörper (1) lösbar verbunden ist.

9. Verbindung nach Anspruch 1, **dadurch gekennzeichnet, daß** die azimutal verlaufende Nut (8) des Bolzens (3) eine umlaufende Ringnut ist.

10. Verbindung nach einem der vorhergehenden Ansprüche, **dadurch gekennzeichnet, daß** der Bolzen (3) an seinem Ende und/oder der Haltekopf (2) in einem außeraxialen Hohlraum (4) des Spannkörpers (1) untergebracht und in Längsrichtung des Bolzens (3) festgelegt ist.

11. Verbindung nach einem der vorhergehenden AnSprüche, **dadurch gekennzeichnet, daß** der Bolzen (3) einen azimutal verlaufenden Schlitz (5) des Spannkörpers (1) durchgreift.

12. Verbindung nach Anspruch 11, **dadurch gekennzeichnet, daß** zwischen einer axialen Stirnseite des Spannkörpers (1) und dem azimutal verlaufenden schlitz (5) des Spannkörpers (1) ein im wesentlichen axialer Schlitz (6) verläuft, dessen Breite größer ist als der Durchmesser des Bolzens (3).

13. Verbindung nach einen der vorhergehenden Ansprüche, **dadurch gekennzeichnet, daß** ein Hohlraum des Elements und/oder des Spannkörpers (1) und/oder der spannkörper (1) selbst und/oder der Haltekopf (2) im wesentlichen zylindrisch geformt ist.

14. Verbindung nach einem der vorhergehenden Ansprüche, **dadurch gekennzeichnet, daß** ein Hohlraum des Elementes und/oder des Spannkörpers (1) auf einer axialen Stirnseite offen ist.

15. Verbindung nach einem der vorhergehenden Ansprüche, **dadurch gekennzeichnet, daß** ein Hohlraum des Elementes und/oder des Spannkörpers (1) auf einer axialen Stirnseite geschlossen ist.

## Claims

1. Detachable connection of two elements and at least one bolt (3) arranged therebetween, which is fixed at at least one end via a tensioning body (1) attached to the element, the tensioning body (1) being rotatable with respect to the element about an axis extending essentially perpendicular to the bolt (3) and the tensioning body (1) being fixed in any rotational position with respect to the bolt (3) and/or to the element by adhesion, and the fastening of the bolt (3) on the tensioning body (1) being rotatable about an axis that is distanced from the axis of the tensioning body (1) and approximately parallel thereto, the connection between the bolt (3) and tensioning body (1) is produced by means of a retaining head (2), which is attached detachably to the bolt (3) and is rotatable relative to the tensioning body (1),
**characterised in that** the bolt (3) shows on both sides a groove (8) extending in an azimuthal direction, the retaining head (2), which is of hollow-cylindical shape, has a slot extending essentially in the axial direction of the tensioning body (1), whose flanks engage in a groove (8) extend in an azimuthal direction of the bolt (3), the retaining head (2) with its outer surface, which is directed to the bolt (3) and in opposition thereto, is contacting by positive locking the eccentrical shaped inner surface of the tensioning body (1).

2. Connection according to claim 1, **characterised in that** the bolt (3) is fastened at its other end to the other element.

3. Connection according to claim 1, **characterised in that**
- the bolt (3) is fixed at its other end by means of a further tensioning body attached to the other element,
- the other tensioning body is rotatable with respect to the other element about an axis extending essentially perpendicular to the bolt,
- the fastening of the bolt (3) to the other tensioning body is rotatable about an axis distanced from the axis of this tensioning body and approximately parallel thereto, and
- the other tensioning body is fixed in any rotational position with respect to bolt (3) and/or the other element by adhesion.

4. Connection according to one of the preceding claims, **characterised in that** the adhesion is frictional locking.

5. Connection according to one of the preceding claims, **characterised in that** the bolt (3) penetrates at least one of the elements along a certain length.

6. Connection according to one of the preceding claims, **characterised in that** the bolt (3) penetrates a third element that is arranged between the two elements.

7. Connection according to one of the preceding claims, **characterised in that** the tensioning body (1) is accommodated in a cavity of the element that fixes the tensioning body (1) at both sides in the longitudinal direction of the bolt (3).

8. Connection according to claim 1, **characterised in that** the retaining head (2) is also detachably connected to the tensioning body (1).

9. Connection according to claim 1, **characterised in that** the azimuthally extending groove (8) of the bolt (3) is a surrounding annular groove.

10. Connection according to one of the preceding claims, **characterised in that** the bolt (3), at its end, and/or the retaining head (2) is accommodated in an extra-axial cavity (4) of the tensioning body (1) and is fixed in the longitudinal direction of the bolt (3).

11. Connection according to one of the preceding claims, **characterised in that** the bolt (3) penetrates an azimuthally extending slot (5) of the tensioning body (1).

12. Connection according to claim 11, **characterised in that** there extends between an axial end face of the tensioning body (1) and the azimuthally extending slot (5) of the tensioning body (1) an essentially axial slot (6), whose width is greater than the diameter of the bolt (3).

13. Connection according to one of the preceding claims, **characterised in that** a cavity of the element and/or of the tensioning body (1) and/or the tensioning body (1) itself and/or the retaining head (2) is formed so as to be essentially cylindrical.

14. Connection according to one of the preceding claims, **characterised in that** a cavity of the element and/or of the tensioning body (1) is open on an axial end face.

15. Connection according to one of the preceding claims, **characterised in that** a cavity of the element and/or of the tensioning body (1) is closed on an axial end face.

## Revendications

1. Liaison amovible composée de deux éléments, et d' au moins un goujon (3) situé entre ces deux éléments, dont l'une des extrémités au minimum est fixée sur un dispositif de serrage (1), le dispositif de serrage (1) pouvant tourner par rapport à l'élément, autour d'un axe essentiellement perpendiculaire au goujon (3), et le dispositif de serrage (1) étant fixé par adhérence dans chaque position de rotation par rapport au goujon (3) et/ou l'élément, la fixation du goujon (3) sur le dispositif de serrage (1) pouvant tourner autour d'un axe situé à une certaine distance du dispositif de serrage (1) et quasiment parallèle à celui-ci, la liaison entre le goujon (3) et le dispositif de serrage (1) est réalisée au moyen d'une tête (2) amovible, montée sur le goujon (3) et pouvant tourner par rapport au dispositif de serrage (1), **caractérisée en ce que** le goujon (3) présente à deux côtés une rainure (8) azimutale, la tête (2) formée comme un cylindre creux présente une fente (7) dans le sens de l'axe du dispositif de serrage (1), dont les flancs engrènent dans une rainure (8) azimutale du goujon (3), la tête (2) avec ses surfaces extérieures, qui sont orientées an goujon (3) et au direction contraire, est en contacte par conclusion de forme avec la surface interieur formée eccentrique du dispositif de serrage (1).

2. Liaison selon la revendication 1, **caractérisée en ce que** l'autre extrémité du goujon (3) est reliée à l'autre élément.

3. Liaison selon la revendication 1, **caractérisée en ce que**
- l'autre extrémité du goujon (3) est fixée au moyen d'un second dispositif de serrage monté sur l'autre élément,
- l'autre dispositif de serrage peut tourner par rapport à l'autre élément, autour d'un axe essentiellement perpendiculaire au goujon,
- la fixation du goujon (3) sur l'autre dispositif de serrage peut tourner autour d'un axe situé à une certaine distance de l'axe de ce dispositif de serrage et quasiment parallèle à cet axe, et
- l'autre dispositif de serrage étant fixé par adhérence par rapport au goujon et/ou à l'autre élément dans chaque position.

4. Liaison selon l'une des revendications précédentes, **caractérisée en ce que** l'adhérence est réalisée par friction.

5. Liaison selon l'une des revendications précédentes, **caractérisée en ce que** le goujon (3) traverse au moins l'un des éléments sur une longueur déterminée.

6. Liaison selon l'une des revendications précédentes, **caractérisée en ce que** le goujon (3) traverse un troisième élément placé entre les deux éléments.

7. Liaison selon l'une des revendications précédentes, **caractérisée en ce que** le dispositif de serrage (1) est logé dans une cavité de l'élément, fixant le dispositif de serrage (1) des deux côtés dans le sens longitudinal du goujon (3).

8. Liaison selon la revendication 1, **caractérisée en ce que** la tête (2) est aussi reliée au dispositif de serrage (1) par une liaison amovible.

9. Liaison selon la revendication 1, **caractérisée en ce que** la rainure azimutale (8) du goujon (3) est une gorge de retenue annulaire.

10. Liaison selon l'une des revendications précédentes, **caractérisée en ce que** l'extrémité du goujon (3) et/ou la tête (2) sont logés dans une cavité (4) du dispositif de serrage (1) et sont fixés dans le sens longitudinal du goujon (3).

11. Liaison selon l'une des revendications précédentes, **caractérisée en ce que** le goujon (3) traverse une fente azimutale (5) du dispositif de serrage (1).

12. Liaison selon la revendication 12, **caractérisée en ce que** le système présente une fente (6) essentiellement axiale entre la face axiale du dispositif de serrage (1) et la fente azimutale (5) du dispositif de serrage (1), la largeur de la fente étant supérieure au diamètre du goujon (3).

13. Liaison selon l'une des revendications précédentes, **caractérisée en ce que** une cavité de l'élément et/ou du dispositif de serrage (1), et/ou le dispositif de serrage (1) en tant que tel, et/ou la tête (2) ont une forme essentiellement cylindrique.

14. Liaison selon l'une des revendications précédentes, **caractérisée en ce que** une cavité de l'élément et/ou du dispositif de serrage (1) est ouverte sur une face frontale axiale.

15. Liaison selon l'une des revendications précédentes, **caractérisée en ce que** une cavité de l'élément et/ou du dispositif de serrage (1) est fermée sur une face frontale axiale.
